# EUROPEAN PATENT SPECIFICATION

(11) **EP 4 260 638 B1**
(45) Date of publication and mention of the grant of the patent: **03.12.2025**
(21) Application number: 21918500.6
(22) Date of filing: 14.01.2021
(51) Int. Cl.: H04W 72/12

(54) **TRANSMISSION IN SMALL DATA TRANSMISSION MODE**
ÜBERTRAGUNG IM KLEINDATENÜBERTRAGUNGSMODUS
TRANSMISSION DANS UN MODE DE TRANSMISSION DE PETITES DONNÉES

(43) Date of publication of application: 18.10.2023
(73) Proprietor: Nokia Technologies Oy, 02610 Espoo (FI)
(72) Inventor: TURTINEN, Samuli Heikki, 91100 li (FI); KOSKINEN, Jussi-Pekka, 90420 Oulu (FI); WU, Chunli, Beijing 102208 (CN)
(74) Representative: Nokia EPO representatives
(86) International application number: PCT/CN2021/071950
(87) International publication number: WO 2022/151292

(56) References cited:
- WO-A1-2016/070415
- CN-A- 111 800 888
- HUAWEI ET AL: "SDT aspects common for RACH-based and CG-based SDT scheme", vol. RAN WG2, no. Online; 20201102 - 20201113, 23 October 2020 (2020-10-23), XP052362975, Retrieved from the Internet <URL:https://ftp.3gpp.org/tsg_ran/WG2_RL2/TSGR2_112-e/Docs/R2-2009930.zip R2-2009930 SDT aspects common for RACH and CG SDT.docx> [retrieved on 20201023]
- SAMSUNG: "Control Plane Aspects of SDT", vol. RAN WG2, no. Electronic; 20201102 - 20201113, 23 October 2020 (2020-10-23), XP052362147, Retrieved from the Internet <URL:https://ftp.3gpp.org/tsg_ran/WG2_RL2/TSGR2_112-e/Docs/R2-2009095.zip R2-2009095_Control Plane Aspects of SDT.doc> [retrieved on 20201023]
- ERICSSON: "RRC aspects for SDT", vol. RAN WG2, no. Electronic meeting; 20201102 - 20201113, 22 October 2020 (2020-10-22), XP052363010, Retrieved from the Internet <URL:https://ftp.3gpp.org/tsg_ran/WG2_RL2/TSGR2_112-e/Docs/R2-2009966.zip R2-2009966 RRC aspects for SDT.docx> [retrieved on 20201022]
- MEDIATEK INC ET AL: "RRC-less SDT over CG", vol. RAN WG2, no. E-meeting; 20201102 - 20201113, 23 October 2020 (2020-10-23), XP052362108, Retrieved from the Internet <URL:https://ftp.3gpp.org/tsg_ran/WG2_RL2/TSGR2_112-e/Docs/R2-2009055.zip R2-2009055.docx> [retrieved on 20201023]
- ZTE CORPORATION, SANECHIPS: "Control plane aspects of SDT", 3GPP DRAFT; R2-2009190, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. e-meeting ;20201102 - 20201113, 22 October 2020 (2020-10-22), Mobile Competence Centre ; 650, route des Lucioles ; F-06921 Sophia-Antipolis Cedex ; France , XP051941254
- SAMSUNG: "Control Plane Aspects of SDT", 3GPP DRAFT; R2-2009095, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic; 20201102 - 20201113, 23 October 2020 (2020-10-23), Mobile Competence Centre ; 650, route des Lucioles ; F-06921 Sophia-Antipolis Cedex ; France , XP051942126

## Description

### FIELD

Embodiments of the present disclosure generally relate to the field of telecommunication and in particular, to methods, devices, apparatuses and computer readable storage medium for transmission in a small data transmission (SDT) mode.

### BACKGROUND

In some communication systems, a terminal device can transition between an inactive state and a connected state. In the inactive state, the terminal device may not have a connection established with a network device for communications. To avoid unnecessary signaling overhead and power consumption for establishing or reestablishing a connection, it has been agreed to support small data transmission (SDT) for a terminal device in the inactive state, without requiring the terminal device to establish a connection with a network device.
In "SDT aspects common for RACH-based and CG-based SDT scheme" by Huawei et al., 3GPP draft; R2-2009930, reference is made to small data transmission (SDT) for RACH and CG based SDT scheme. More specifically, there is a concrete application mentioned, this of heart-bit traffic, which is typically a small data transmission. There is also reference to mechanisms to choose the type of SDT between a CG based scheme and RA based scheme.
In "Control Plane Aspects of SDT" by Samsung, 3GPP draft; R2-2009095, reference is made to how the SDT procedure starts and ends.
In "RRC aspects of SDT" by Ericsson, 3GPP draft; R2-2009966, reference is made to how RACH and CG based SDT configurations are handled.
In "RRC-less SDT over CG" by Mediatek Inc et al., 3GPP draft; R2-2009055, reference is made to how SDT data can be transmitted without RRC signaling.

The invention is defined by the appended independent claims and further embodiments are described by the dependent claims.

### BRIEF DESCRIPTION OF THE DRAWINGS

Some example embodiments will now be described with reference to the accompanying drawings, where:
Fig. 1 illustrates an example communication environment in which example embodiments of the present disclosure can be implemented;
Fig. 2 illustrates a signaling flow for transmission in a SDT mode according to some example embodiments of the present disclosure;
Fig. 3 illustrates a flowchart of a method implemented at a first device according to a claimed embodiment of the present disclosure;
Fig. 4 illustrates a flowchart of a method implemented at a second device according to claimed embodiment of the present disclosure;
Fig. 5 illustrates a simplified block diagram of an apparatus that is suitable for implementing example embodiments of the present disclosure; and
Fig. 6 illustrates a block diagram of an example computer readable medium in accordance with some example embodiments of the present disclosure.

Throughout the drawings, the same or similar reference numerals represent the same or similar element.

### DETAILED DESCRIPTION

In the following description and claims, unless defined otherwise, all technical and scientific terms used herein have the same meaning as commonly understood by one of ordinary skills in the art to which this disclosure belongs.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other resource enabling a communication, and the like. In the following, a resource in both frequency domain and time domain will be used as an example of a transmission resource for describing some example embodiments of the present disclosure. It is noted that example embodiments of the present disclosure are equally applicable to other resources in other domains.

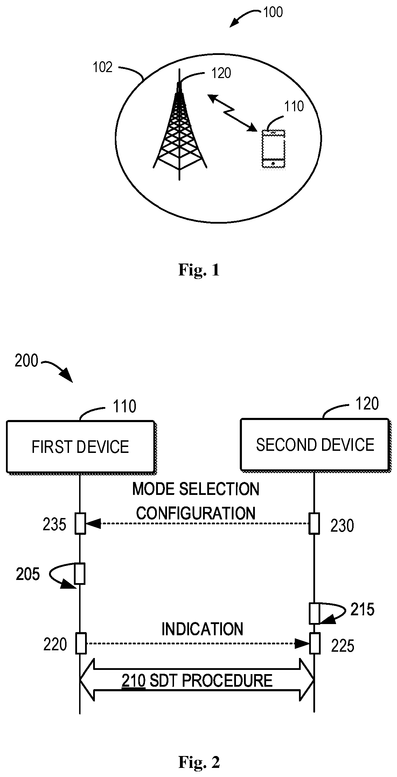

Fig. 1 shows an example communication environment 100 in which example embodiments of the present disclosure can be implemented. In the communication environment 100, a plurality of communication devices, including a first device 110 and a second device 120 can communicate with each other.

In the example of Fig. 1, the first device 110 is illustrated as a terminal device while the second device 120 is illustrated as a network device serving the terminal device. The serving area of the second device 120 may be called a cell 102.

It is to be understood that the number of devices and their connections shown in Fig. 1 are only for the purpose of illustration without suggesting any limitation. The environment 100 may include any suitable number of devices adapted for implementing embodiments of the present disclosure. Although not shown, it would be appreciated that one or more additional devices may be located in the cell 102, and one or more additional cells may be deployed in the environment 100. It is noted that although illustrated as a network device, the second device 120 may be other device than a network device. Although illustrated as a terminal device, the first device 110 may be other device than a terminal device.

In some example embodiments, if the first device 110 is a terminal device and the second device 120 is a network device, a link from the second device 120 to the first device 110 is referred to as a downlink (DL), while a link from the first device 110 to the second device 120 is referred to as an uplink (UL). In DL, the second device 120 is a transmitting (TX) device (or a transmitter) and the first device 110 is a receiving (RX) device (or a receiver). In UL, the first device 110 is a TX device (or a transmitter) and the second device 120 is a RX device (or a receiver).

Communications in the communication environment 100 may be implemented according to any proper communication protocol(s), comprising, but not limited to, cellular communication protocols of the first generation (1G), the second generation (2G), the third generation (3G), the fourth generation (4G) and the fifth generation (5G) and on the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

A device (e.g., a terminal device) can transition between an inactive state and a connected state. The inactive state may sometimes be referred to as an inactive mode, an RRC_INACTIVE state/mode, or an inactive state in a RRC_CONNECTED state/mode, and such terms are used interchangeably herein. The connected state may sometimes be referred to as a connected mode, an active state/mode, or an RRC_CONNECTED state/mode, and such terms are used interchangeably herein.

In the inactive state, the terminal device does not have any dedicated resources (e.g., time and frequency resources) for transmission and/or reception. In the connected state, a connection is established between the terminal device and the network device and thus the terminal device can perform normal communication with the network device via the connection.

Generally, there is a certain amount of signaling overhead and power consumption to transition the terminal device from an inactive state to a connected state by establishing or reestablishing a connection between the terminal device and the network device. If connection setup and subsequently release happens for at least one data transmission of the terminal device in the inactive state no matter how small and infrequent the data packets are, it may result in unnecessary power consumption and signalling overhead. Thus, allowing data transmission to and/or from a terminal device that is in inactive state makes sense if the terminal device has intermittent small data packets to transmit. It has been agreed to support small data transmission (SDT) for a terminal device in the inactive state, without transitioning the terminal device to the connected sate. As used herein, the term "SDT" refers to a type of transmission where a small amount of data is triggered, although other terms may also be used.

There are various applications that involve exchange of relatively small amounts of data. For example, in some applications of mobile devices, SDT may include traffic from Instant Messaging (IM) services, heart-beat or keep-alive traffic from IM or email clients and other services, push notifications from various applications, traffic from wearables (including, for example, periodic positioning information), and/or the like. In some applications of non-mobile devices, SDT may include sensor data (e.g., temperature, pressure readings transmitted periodically or in an event-triggered manner in an IoT network), metering and alerting information sent from smart meters, and/or the like.

Signalling overhead from a terminal device in the inactive state for small data packets is a general problem, not only for network performance and efficiency but also for the battery performance. In general, any device that has intermittent small data packets in the inactive state will benefit from enabling SDT. In some example embodiments, SDT may be enabled using messages sent in a random access (RA) procedure and/or a configured grant (CG). The RA procedure may also be referred to as a random access channel (RACH) procedure.

It has been discussed to allow a single transmission of a UL or DL packet within a SDT procedure. It is currently discussed the possibility to communicate multiple UL and/or DL data packets during one SDT procedure while keeping the terminal device in the inactive state. A SDT procedure with a single data transmission allowed may be referred to as a SDT mode, a SDT procedure with more than one data transmission may be referred to as another SDT mode. The terminal device and the network device may operate differently in different SDT modes. For example, the terminal device may continuously monitor a control channel during a SDT procedure with multiple data transmissions, and the network device may allocate dedicated resources for one or more subsequent data transmission to the terminal device. The monitoring and the allocation of the dedicated resources may not be needed in the SDT procedure allows a single data transmission.

The different data transmission possibilities, for example, different numbers of data transmissions allowed in a SDT procedure, may increase the complexity of both the terminal device and the network device. In addition, although the SDT procedure with multiple data transmissions allows more data to be communicated, the power consumption of the terminal device may be increased and the possibility of failed data transmission is increased as the communication duration in the inactive state increases. Thus, it is not desirable to always use a SDT mode allowing a single data transmission or a SDT mode allowing multiple data transmissions.

According to some example embodiments of the present disclosure, there is provided an improved solution for SDT. In this solution, a first device (e.g., a terminal device) is configured with a mode selection configuration. The first device is able to select, from a plurality of possible SDT modes, a SDT mode to be initiated with a second device based on the mode selection configuration. The second device may also be able to determine the SDT mode selected by the first device. A SDT procedure in the selected SDT mode can be performed between the first device and the second device. Through this solution, a suitable SDT mode is selected based on the predetermined or predefined mode selection configuration. The first and second devices may operate accordingly based on the selected SDT mode during the SDT procedure.

Example embodiments of the present disclosure will be described in detail below with reference to the accompanying drawings.

Reference is now made to Fig. 2, which shows a signaling flow 200 for transmission in a SDT mode according to some example embodiments of the present disclosure. For the purpose of discussion, the signaling flow 200 will be described with reference to Fig. 1. The signaling flow 200 involves the first device 110 and the second device 120 as illustrated in Fig. 1.

In operation, the first device 110 selects 205, based on a mode selection configuration, a SDT mode to be initiated from a plurality of SDT modes.

The plurality of small data transmission modes may be defined based on the number of data transmissions allowed in a SDT procedure, and/or based on the different resource types used in a small data transmission procedure. In some example embodiments, two or more of the plurality of SDT modes may be different at least in the number of data transmissions between the first device 110 and the second device 120. In some example embodiments, the plurality of SDT modes comprise a SDT mode that allows a single data transmission during a SDT procedure, and a SDT mode that allows more than one data transmission during a SDT procedure. In some cases, the SDT mode allowing a single data transmission may be referred to as a "single-shot" SDT mode. In some cases, the SDT mode allowing a plurality of data transmissions may be referred to as a "multi-shot" SDT mode, or subsequent SDT or subsequent UL/DL data transmission as it supports one or more subsequent data transmission after the first data transmission, and such terms are used interchangeably herein.

In the single-shot SDT mode, after a SDT procedure is initiated, for example, by transmitting a request message to the second device 120, a single data transmission, for example, a single data packet, is communicated between the first device 110 and the second device 120. The single data transmission may involve a small volume of data transmitted from the first device 110 to the second device 120. After the single data transmission, the second device 120 may instruct the first device 110 to enter the inactive state. Alternatively, after the single data transmission, the second device 120 may instruct the first device 110 to enter the connected state.

In the multi-shot SDT mode, after a SDT procedure is initiated, a plurality of data transmissions can be performed by the first device 110 and/or the second device 120. The plurality of data transmissions may involve transmissions of small data from the first device 110 to the second device 120, and/or the second device 120 to the first device 110. That is, both UL and DL data transmissions may be performed during the SDT procedure. After the plurality of data transmissions, the second device 120 may instruct the first device 110 to enter the inactive state. Alternatively, after the plurality of data transmissions, the second device 120 may instruct the first device 110 to enter the connected state.

In some example embodiments, a SDT procedure may be initiated based on a RA procedure or using a CG. Two or more different SDT modes may be defined based on the resource types (e.g., the RA resources or CG resources) used for the SDT procedure. A SDT mode defined as using RA resources or a RA procedure for a SDT procedure may be referred to as a RA-based SDT mode or a RA-SDT mode. A SDT mode defined using CG for a SDT procedure may be referred to as a CG-based SDT mode or a CG-SDT mode. In a RA-based SDT mode, the data may be transmitted from the first device 110 to the second device 120 in MsgA in a two-step RA procedure or in Msg3 in a four-step RA procedure. In a CG-based SDT mode, a data transmission(s) may be directly performed using resources of a CG, for example, resources of a configured grant type-1.

In some example embodiments, as a RA procedure may include a two-step RA procedure or a four-step RA procedure, there may be different RA-based SDT modes, one using a two-step RA procedure and one using a four-step RA procedure. The RA-based SDT mode based on the two-step RA resource may be referred to as a two-step RA-based SDT mode, and the RA-based SDT mode based on the four-step RA resource may be referred to as a four-step RA-based SDT mode.

In some example embodiments, a RA-based SDT mode may also be initiated over Random Access Channel (RACH) used by devices other than the first device 110 and which may not be performing SDT procedure. For example, such RACH could be shared among devices performing a SDT procedure and devices performing other procedures, e.g., connection establishment procedure. In some embodiments, a SDT procedure performed over a RACH shared between devices performing SDT procedure and devices not performing SDT procedure may also be regarded to as an SDT mode. In some example embodiments, when the first device 110 initiates a SDT procedure over a RA-SDT mode using a RACH shared between devices performing a SDT procedure and devices not performing SDT procedure, the first device 110 may indicate to the second device 120 that the first device 110 is performing a SDT procedure. In some example embodiments, the first device 110 may encode such indication into the MAC PDU it transmits in the RA procedure, e.g., through MsgA in a two-step RA procedure or in Msg3 in a four-step RA procedure. For example, a different LCID value for the CCCH SDU could be used for the purpose. For example, the CCCH SDU may include an RRC message for resuming the connection by the first device 110 or may include an RRC message for SDT procedure. In some example embodiments, the LCID used for the CCCH SDU is different when SDT procedure is performed compared to the LCID used for the CCCH SDU in case the first device 110 performs, for example, the connection establishment procedure. In some example embodiments, there may further be different LCID values for different CCCH SDU sizes allocated. For example, one LCID indicated CCCH SDU size of 64 bits and SDT procedure and another LCID indicates CCCH SDU size of 48 bits and SDT procedure while another set of two LCIDs may indicate CCCH SDU size but not the SDT procedure being performed.

In some example SDT modes described above, the single-shot SDT mode and multi-shot SDT mode may define different numbers of data transmissions performed in a SDT procedure, without the limitation or constraint on the resource types (RA resource or CG), which means that a single-shot SDT mode or a multi-shot SDT mode may be initiated either through a RACH procedure or using a CG. The RA-based SDT mode(s) (including a two-step RA-based SDT mode and a four-step RA-based SDT mode) may define the resource types used for a SDT procedure, without the limitation or constraint on the number of data transmission. In some example embodiments, more SDT modes may be defined based on both the number of data transmissions and the resource types used in a SDT procedure. In an example embodiment, a SDT mode may allow a single data transmission and use a RA procedure in a SDT procedure, and such a SDT mode may be referred to as a single-shot RA-based SDT mode. In an example embodiment, a SDT mode may allow a plurality of data transmissions and use a RA procedure in a SDT procedure, and such a SDT mode may be referred to as a multi-shot RA-based SDT mode. In an example embodiment, a SDT mode may allow a single data transmission and use a CG in a SDT procedure, and such a SDT mode may be referred to as a single-shot CG-based SDT mode. In an example embodiment, a SDT mode may allow a plurality of data transmissions and use a CG in a SDT procedure, and such a SDT mode may be referred to as a multi-shot CG-based SDT mode. In some examples, different single-shot RA-based SDT modes and/or different multi-shot RA-based SDT modes may be defined based on whether a two-step RA procedure or a four step RA procedure is used.

It would be appreciated that although some SDT modes are described in some example embodiments of the present disclosure, there may be other SDT modes applicable. In some other example embodiments, a plurality of different SDT modes may be defined based on the specific numbers or number ranges of successive data transmissions allowed in a SDT procedure. For example, a SDT mode may be defined as allowing two data transmissions during a SDT procedure, another SDT mode may be defined as allowing three data transmissions during a SDT procedure, and so on.

The mode selection configuration may include configuration information that can be used by the first device 110 to determine whether a SDT mode can be selected or initiated. In some example embodiments, as illustrated in the signaling flow 200 of Fig. 2, the second device 120 may transmit 230 the mode selection configuration. The first device 110 may receive 235 the mode selection configuration from the second device 120. In some example embodiments, the first device 110 may receive the mode selection configuration one or more other devices connected to the first device 110, for example, one or more other network devices that previously served the first device 110.

In some example embodiments, the mode selection configuration may be configured to the first device 110 through dedicated signaling. In an example embodiment, the dedicated signaling may include dedicated radio resource control (RRC) signaling, for example, a RRC release message (also represented as *RRCRelease* message). In some examples, the RRC release message may be transmitted when the second device 120 or other device configures the first device 110 to transition to the inactive state or may be transmitted to the first device 110 for other purposes. In some example embodiments, the dedicated signaling may include control information transmitted to the first device 110, for example, via a physical (PHY) channel (e.g., downlink control information (DCI)) or medium access control (MAC) signaling (e.g., a MAC control element (MAC CE)). The mode selection configuration may also be transmitted to the first device 1110 through other signaling dedicated for the first device 110.

In some example embodiments, the mode selection configuration may be received through broadcast information from the second device 120 or other device that previously served the first device 110. In an example embodiment, the broadcast information may include system information, which may be broadcasted in a system information block (SIB). In some examples, the broadcast information may be detected by the first device 110 when the first device 110 enters a serving area of the second device 120. The serving area may be, for example, a cell served by the second device 120, or a RAN paging area of the second device 120 (which may cover one or more cells served by the second device 120). The serving area may be, in another example, a cell served by the second device 120 or other device that previously served the first device 110 or where the first device 110 was previously camped and acquired the related broadcast information.

In some cases, the first device 110 may receive different mode selection configurations transmitted through the dedicated signaling and/or the system information. In some example embodiments, the first device 110 may use the latest mode selection configuration or the mode selection configuration received in a serving area in which the first device 110 is currently located. That is, the last mode selection configuration or the mode selection configuration valid in the current serving area may take precedence. In some example embodiments, a more stringent mode selection configuration may take precedence.

In some example embodiments, the mode selection configuration may be specific to the first device 110. For example, the second device 120 or other device that previously served the first device 110 may specifically configure the first device 110 with the mode selection configuration. Different first devices served by the second device 120 may be configured with different mode selection configurations. In some example embodiments, the device-specific mode selection configuration may be transmitted to the first device 110 via dedicated signaling. In some example embodiments, the mode selection configuration may be specific to a serving area (e.g., a cell or a RAN paging area) in which the first device 110 is located. That is, a plurality of first devices located within the substantially same serving area may be configured commonly or dedicatedly in selecting the SDT mode. In some example embodiments, the area-specific mode selection configuration may be broadcasted by the second device 120.

In some example embodiments, the mode selection configuration may include a threshold-based configuration including different thresholds for the plurality of SDT modes, which may be used by the first device 110 to determine whether and when one of the plurality of SDT modes can be initiated.

In some example embodiments, the threshold-based configuration for mode selection may include different data volume thresholds for the plurality of SDT modes. In an example embodiment, a data volume threshold for a SDT mode that allows a relatively high number of data transmissions during a SDT procedure may be higher than a data volume threshold for a SDT mode that allows a relatively small number of data transmissions during a SDT procedure. For example, a first data volume threshold is configured for a first SDT mode (e.g., the single-shot SDT mode or other SDT modes that allow a single data transmission or a small number of data transmission), and a second data volume threshold may be configured for a second SDT mode (e.g., the multi-shot SDT mode or other SDT modes that allow a higher number of data transmissions). The first data volume threshold may be lower than the second data volume threshold.

The data volume thresholds may be compared with a volume of data to be transmitted so as to determine whether a SDT procedure can be performed and which SDT mode is initiated. As different SDT modes may allow different numbers of data transmissions, by configuring separate data volume thresholds, the first device 110 can select a more suitable SDT mode depending on the volume of data to be transmitted. The volume of data to be transmitted may include total buffered data of the first device 110 or buffered data for one or more radio bearers (data radio bearer (DRB) and/or signaling radio bearer (SRB)) that are allowed for SDT. The volume of data to be transmitted may, in some examples, further include data that the first device 110 expects to become into buffer for transmission.

In some example embodiments, if the first device 110 determines that the volume of data to be transmitted is below or equal to the first data volume threshold for the first SDT mode, the first SDT mode may be selected for initiation. In some example embodiments, if the first device 110 determines that the volume of data to be transmitted exceeds the first data volume threshold and is below or equal to the second data volume threshold for the second SDT mode, the first device 110 may select the second SDT mode. If there is one or more other SDT modes for which other higher data volume thresholds are configured, the first device 110 may likewise perform the comparison of the volume of data to be transmitted with the other higher data volume thresholds to determine which SDT mode is selected.

In some example embodiments, if the volume of data to be transmitted exceeds all the data volume thresholds for the plurality of SDT modes, for example, exceeds the second data volume threshold, the first device 110 may determine not to perform a SDT procedure. In some example embodiments, the first device 110 may instead attempt to establish or resume a connection with the second device 120 to transmit the relatively large volume of data in a connected state.

In some example embodiments, if the first device 110 receives from, for example, different dedicated signaling and/or broadcast information, a first mode selection configuration comprising a first plurality of data volume thresholds for the plurality of SDT modes and a second selection configuration comprising a second plurality of data volume thresholds for the plurality of SDT modes, the first device 110 may use the more stringent configuration, for example the one comprising the lower data volume thresholds.

In some example embodiments, as an alternative or in addition to the data volume thresholds, the mode selection configuration may comprise a validity configuration indicating whether any of the plurality of SDT modes is allowable for the first device 110. In the case where a SDT mode is allowed, the first device 110 determines whether this SDT mode can be selected for initiation or not. For example, the first device 110 may be configured with different data volume thresholds for the plurality of SDT modes, and may use one or more of the data volume thresholds if the corresponding SDT modes are allowed for the first device 110. In some examples, instead of being configured with separate data thresholds, the first device 110 may have a common data volume threshold for SDT and if a SDT mode is allowed, the first device 110may compare a volume of data to be transmitted with the common data volume threshold to determine whether that SDT mode can be initiated.

In some example embodiments, the validity configuration may include allowance of one, more, or all of the plurality of SDT modes indicated to the first device 110. The first device 110 may receive, from the second device 120 or other device that previously served the first device 110, one or more allowance indications of whether one or more SDT modes are allowed or not allowed.

In some example embodiments, the first device 110 may receive a first allowance indication that the first device is allowed to initiate a first SDT mode, and/or a second allowance indication that the first device is allowed to initiate a second SDT mode. The first SDT mode or the second SDT mode may be different SDT modes, such as a single-shot SDT mode and a multi-shot SDT mode. In some example embodiments, the first device 110 may alternatively or additionally receive a third allowance indication that the first device 110 is prevented from initiating the first SDT mode, and/or a fourth allowance indication that the first device 110 is prevented from initiating the second SDT mode. In some example embodiments, the first device 110 may alternatively or additionally receive a fifth allowance indication of whether a subsequent UL or DL data transmission is allowed during a small data transmission procedure. The allowance of the subsequent UL or DL data transmission indicates that the first device 110 can use the second mode and/or other SDT modes that allows for more than one data transmission.

In some example embodiments, the allowance or disallowance of one or more SDT modes may be specific to a serving area. The first device 110 may be allowed or prevented from using the one or more SDT modes when it enters the specific serving area. In some examples, the specific serving area may comprise one or more cells or alternatively one or more RAN areas.

In some example embodiments, one or more of the plurality of SDT modes are by default not allowed or supported in a serving area or for a specific device unless the first device 110 is indicated explicitly that the one or more SDT modes are allowed or supported, for example, by an allowance indication. As an example, the multi-shot SDT mode with a plurality of data transmissions may not be supported in a serving area by default. In some cases, the second device 120 may explicitly indicate to the first device 110 that it is allowed to initiate the multi-shot SDT mode.

In some example embodiments, the allowance or disallowance of one or more SDT modes may be specific to a resource type used for initiating a SDT mode. The possible resource types may include a RA resource or a CG resource, and the corresponding SDT procedures are referred to as RA-based SDT procedure or CG-based SDT procedure. In an example embodiment, the first device 110 may receive a sixth allowance indication of whether it is allowed to initiate a SDT mode using a specific resource type. For example, the first device 110 may be configured to be allowed or not allowed for initiating a RA-based SDT procedure according to a certain SDT mode. As another example, the first device 110 may be configured to be allowed or not allowed for initiating a CG-based SDT procedure according to a certain SDT mode (for example, the single-shot SDT mode or the multi-shot SDT mode). In some examples, the RA resources may include resources for a two-step RA procedure and resources for a fourth-step RA procedure. The first device 110 may be configured to be allowed or disallowed to for initiating a two-step RA procedure or a fourth-step RA procedure for a certain SDT mode.

In some example embodiments, the allowance or disallowance of one or more SDT modes may be specific to a radio bearer (DRB or SRB). In an example embodiment, the first device 110 may be allowed to initiate a certain SDT mode on one or more radio bearers. In an example embodiment, the first device 110 may be prevented from initiating the certain SDT mode on one or more other radio bearers. In some example embodiments, one or more common radio bearers may be allowed or disallowed for two or more SDT modes, while one or more separate radio bearers may be allowed or disallowed for a specific SDT mode.

In some example embodiments, in addition to obtaining the allowance indication(s) or as an alternative, the validity configuration for the first device 110 may comprise a criterion defined for determining whether or when the first device 110 is allowed to initiate any of the plurality of SDT modes.

Specifically, in some example embodiments, the criterion for the validity configuration may be based on a comparison of a mobility level of the first device 110 with a mobility threshold. The mobility level indicates how frequently the first device 110 moves. The mobility level may be measured based on the number of beam changes and/or the number of cell changes observed during a period of time, for example, during the inactive state. The larger the number of beam changes and/or the number of cell changes are, the higher the mobility level is.

In some examples, if the mobility level is high, for example, exceeds the mobility threshold, the first device 110 determines that it is allowed to use a SDT mode with a small number of data transmissions, for example the single-shot SDT mode with a single data transmission. In the case of a higher mobility level, a mobility event of the first device 110 is more likely to occur during a SDT procedure. If the movement of the first device 110 results in a beam change during the SDT procedure, since beam management is generally not supported in the inactive state, the first device 110 is likely to lose connection to the second device 120 and one or more subsequent data transmission may fail. Therefore, in the case of higher mobility level, it is more desirable to use a SDT mode with a small number of data transmissions, such as the single-shot SDT mode.

In some example embodiments, the criterion for the validity configuration may be alternatively or additionally based on a device type. In some example embodiments, a SDT mode with a small number of data transmissions, such as the single-shot SDT mode, may be allowed for one or more device types that need low power consumption and/or generally have a limited amount of data to be transmitted for a long period of time. An example of such device types may include a Reduced Capability (RedCap) device. If the first device 110 is of such a device type, it may be determined that the SDT mode with a small number of data transmissions, such as the single-shot SDT mode, is allowed for the first device 110, while other SDT modes, such as the multi-shot SDT mode is not allowed. In some example embodiments, a SDT mode with a large number of data transmissions, such as the multi-shot SDT mode, may be allowed for one or more device types that have a less limitation on power saving and/or generally have a relatively large amount of data to be transmitted. The first device 110 may determine whether it is allowed to use the second SDT mode based on its device type.

In some example embodiments, the criterion for the validity configuration may be alternatively or additionally based on a device capability. In some example embodiments, a SDT mode with a small number of data transmissions, such as the single-shot SDT mode, may be mandatory capability to be supported by a device that supports SDT procedure. If the first device 110 is of such a device that only supports the single-shot SDT mode, it may be determined that the SDT mode with a small number of data transmissions, such as the single-shot SDT mode, is allowed for the first device 110, while other SDT modes, such as the multi-shot SDT mode is not allowed. In some example embodiments, a SDT mode with a large number of data transmissions, such as the multi-shot SDT mode, may be additional optional or mandatory capability for a device to support which supports the SDT procedure. The first device 110 may determine whether it is allowed to use the multi-shot SDT mode based on its capability.

In some example embodiments, the criterion for the validity configuration may be alternatively or additionally based on data availability in at least one radio bearer (e.g., DRB or SRB) allowed for SDT. For example, if the first device 110 has data to be transmitted but the data are for a radio bearer that is not allowed for SDT, the first device 110 may determine that no SDT mode is allowed for transmission the available data. In the case that data is available in one or more allowed radio bearer, the first device 110 may be allowed to select any of the plurality of SDT modes to initiate a SDT procedure.

In some example embodiments, the criterion for the validity configuration may be based on data availability in at least one radio bearer (e.g., DRB or SRB) allowed for a specific SDT mode. In this case, the allowance of the one or more radio bearers may be specific to a SDT mode. If data is available in the allowed one or more data bearers, the first device 110 may be allowed to initiate that SDT mode. Otherwise, the first device 110 may not perform a SDT procedure to transmit the available data.

In some example embodiments, the criterion for the validity configuration may be based on power saving preference of the first device 110 or of a user of the first device 110. If the first device 110 or its user has a preference of saving power as much as possible, the first device 110 may determine that it is allowed to initiate a SDT mode with a small number of data transmissions, for example, the single-shot SDT mode with a single data transmission allowed. Otherwise, the first device 110 may be allowed to initiate a SDT mode with a high number of data transmissions.

In some example embodiments, the first device 110 may be configured with a single data volume threshold (sometimes referred to as a "third data volume threshold) according to the mode selection configuration. The second device 120 may further configure how the single data volume threshold is used by configuring an allowed SDT mode for the first device 110. For example, the second device 120 may transmit the validity configuration to indicate that the first device 110 is allowed to initiate a certain SDT mode among the plurality of possible SDT modes. The validity configuration may be an explicit allowance indication or a certain criterion as discussed above. If the first device 110 determines that a SDT mode is allowed based on the validity configuration, it may perform the comparison of a volume of data to be transmitted with the single data volume threshold, in order to determine whether the SDT mode can be initiated.

In some other example embodiments, the first device 110 may be configured with more than one data volume threshold but not each data volume threshold is specifically configured for a specific SDT mode. The second device 120 may also configure two or more allowed SDT modes for the first device 110, for example, via the validity configuration. The configured data volume thresholds may be used for the respective allowed SDT modes based on the number of data transmissions allowed in the SDT modes. Generally, a higher data volume threshold may be used for an allowed SDT mode with a higher number of data transmissions. After determining which data volume threshold is used for which allowed SDT mode, the first device 110 may select one of the allowed SDT mode by comparing the volume of the data to be transmitted with the corresponding data volume thresholds in a similar way as discussed above for the separate data volume thresholds.

In some other example embodiments, the threshold-based configuration for mode selection may include different channel quality thresholds for the plurality of SDT modes. The channel quality thresholds may be measured as thresholds for reference signal received power (RSRP), thresholds for reference signal received quality (RSRQ), and/or other factors reflecting a channel quality between the first device 110 and the second device 120, such as Signal to Interference Noise Ratio (SINR) or pathloss. In an example embodiment, a channel quality threshold for a SDT mode that allows a relatively high number of data transmissions during a SDT procedure may be higher than a channel quality threshold for a SDT mode that allows a relatively small number of data transmissions during a SDT procedure. For example, as compared with a first channel quality threshold for a first SDT mode (e.g., the single-shot SDT mode or other SDT modes allowing a smaller number of data transmissions), a second higher channel quality threshold may be configured for a second SDT mode (e.g., the multi-shot SDT mode or other SDT modes allowing a higher number of data transmission). The higher channel quality threshold may indicate that the SDT mode with a relatively high number of data transmissions can be initiated when the channel quality is high enough to ensure the possibility of successful subsequent data transmissions.

The channel quality thresholds may be compared with a quality of a channel between the first device 110 and the second device 120 so as to determine whether one or more SDT modes are allowed to be selected under the current quality of the channel. In some example embodiments, if the first device 110 determines that the quality of the channel exceeds the first channel quality threshold and is below the second channel quality threshold, it may determine that the first SDT mode is allowed to be selected. If the quality of the channel exceeds the second higher channel quality threshold, which means that it also exceeds the first channel quality threshold, the first device 110 may determine that both the first and second SDT modes are allowed to be selected. If there is one or more other SDT modes for which other higher channel quality thresholds are configured, the first device 110 may likewise perform the comparison of the quality of the channel with the other higher data volume thresholds to determine which SDT mode(s) is allowed.

In some example embodiments, after the comparison with the channel quality threshold, the first device 110 may select a SDT mode from the one or more SDT modes that are allowed to be selected. For example, the first device 110 may determine which allowed SDT mode can be used by further comparing a volume of data to be transmitted with the separate data volume thresholds configured for the one or more SDT modes or with a common data volume threshold, as discussed above. In some example embodiments, the first device 110 may select a certain SDT mode for initiation if it determines that the quality of the channel exceeds the channel quality threshold configured for the certain SDT mode.

In the above example embodiments, as different SDT modes may allow different numbers of data transmissions, by configuring separate channel quality thresholds, the first device 110 can a more suitable SDT mode depending on the volume of data to be transmitted.

It has been described above different kinds of mode selection configurations in various example embodiments. It would be appreciated that two or more kinds of the mode selection configurations may be combined for use. It would be also appreciated that there may be other mode selection configurations that can be used separately or in combination with those described above.

With the SDT mode selected, the first device 110 performs 210 a SDT procedure with the second device 120 according to the selected SDT mode. To perform the SDT procedure with the first device 110, the second device 120 determines 215 the SDT mode selected by the first device 110 for initiation. By determining which SDT mode is used in the SDT procedure, the second device 120 may be able to determine which operation is performed during the SDT procedure. For example, if the single-shot SDT mode with a single data transmission is initiated, the second device 120 may, after receiving the single data transmission, transmit a response message to complete the SDT procedure, by indicating the first device 110 to enter the inactive state. The response message may, for example, be a RRS release message with suspend. If the first device 110 initiates a SDT mode that allows a plurality of data transmissions, the second device 120 may determine whether to transmit control information (e.g.. a physical control channel (PCCCH)) to the first device 110 to allocating a resource for a subsequent data transmission, or whether to transmit a subsequent data transmission to the first device 110.

On the side of the first device 110, if the single-shot SDT mode is initiated, the first device 110 may not need to continuously monitor the control information and/or subsequent data transmissions from the second device 120. If the multi-shot SDT mode is initiated, the first device 110 may determine that the control information and/or subsequent data transmissions from the second device 120 are expected after the SDT procedure starts. Similarly, for other SDT modes, such as the RA-based SDT mode and the CG-based SDT mode, the first device 110 may also determine whether or which type of RA procedure can be initiated for SDT, or whether the CG can be used for SDT depending on which SDT mode is selected.

The second device 120 may determine the selection of the SDT mode made by the first device 110 through various ways. In some example embodiments, the second device 120 may determine the selection of the SDT mode made by the first device 110 based on the mode selection configuration. The second device 120 may determine, from the mode selection configuration, that the first device 110 is allowed to initiate a certain SDT mode among the plurality of SDT modes.

In some example embodiments, the first device 110 may indicate the selected SDT mode to the second device 120. As illustrated in Fig. 2, the first device 110 may transmit 220 an indication of the selection of the SDT mode. The second device 120 may receive 225 such an indication to determine which SDT mode is selected and initiated by the first device 110.

The selected SDT mode may be indicated in various ways, either explicitly or implicitly. In some example embodiments, the first device 110 may encode indication information about the selection of the SDT mode into a message to be transmitted to the second device 120, as a part of the SDT procedure. In some examples, such indication information may be encoded in a RRC request message, which is transmitted to the second device 120 to request for initiating a SDT, or a RA preamble transmitted in a RA-based SDT procedure. In some examples, such indication information may be encoded in a data unit, for example, in a MAC protocol data unit (PDU) used for a data transmission during the SDT procedure. The indication information may include a special identity of a logical channel (LCID) or a separate MAC CE.

In some example embodiments, an explicit indication of selection of one of a first and a second SDT modes may be transmitted to the second device 120, and the lack of such indication may imply that the other one of the first and the second SDT modes is selected.

In some example embodiments, the selection of a certain SDT mode may be implicitly indicated based on the resource used in a SDT procedure. Specifically, different available resources for a SDT procedure may be defined to be corresponding to different ones of the plurality of SDT modes. The available resources for a SDT procedure may include RA resources and/or CG resources. If a certain SDT mode is selected, the first device 110 may determine to transmit one or more messages in the SDT procedure using a resource corresponding to the selected SDT mode. The second device 120 may determine the selected SDT mode based on the reception of such message(s) from the first device 110.

In some example embodiments, the selection of a certain SDT mode may be implicitly indicated based on the resource types available for use in a SDT procedure. Specifically, different resource types available for a SDT procedure may be defined to be corresponding to different ones of the plurality of SDT modes. The resource types may include a type of RA resources and a type of CG resources. In some examples, the type of RA resources may be configured to be used for a SDT procedure initiated for one of the single-shot and multi-shot SDT modes, while the type of CG resources may be configured to be used for a SDT procedure initiated for the other one of the single-shot and multi-shot SDT modes. As such, the second device may determine whether the single-shot SDT mode or the multi-shot SDT mode is selected based on whether a RA-based SDT procedure or a CG-based SDT procedure is performed.

In some example embodiments, the selection of a certain SDT mode may be implicitly indicated based on the RA types used in a SDT procedure. There may be a plurality of RA types that are supported by the first device 110, including a two-step RA and a fourth-step RA. In some examples, the two-step RA may be configured to be used for a SDT procedure initiated for one of the single-shot and the multi-shot SDT modes, while the fourth-step RA may be configured to be used for a SDT procedure initiated for the other one of the single-shot and the multi-shot SDT modes. As such, the second device may determine whether the single-shot SDT mode or the multi-shot SDT mode is selected based on whether a two-step RA procedure or a fourth-step RA procedure is performed.

In some example embodiments, the indication of the selection of the SDT mode may be transmitted outside of the SDT procedure. In some example embodiments, the selection of the SDT mode may be indicated explicitly or implicitly in other manners. The scope of the present disclosure is not limited in this regard.

In some example embodiments, the first device 110 may need to perform failure recovery when it performs the SDT procedure by the selected SDT mode. In some example embodiments, the SDT procedure may not succeed due to the first device 110 being unable to decode a response message from the second device 120. In some examples, this may happen due to the first device 110 selecting a certain SDT mode. In some other example embodiments, the SDT procedure may not succeed due to the first device 110 being unable to confirm the integrity of the second device 120, for example, due to an integrity failure after receiving a transmission from the second device 120. Such transmission may consist of one or more data and/or signaling packets which the first device 110 may use one or more to determine the integrity of the second device 120. In some other example embodiments, the SDT procedure may not succeed due to a timer expiry running at the first device 110. Such timer may be initiated or triggered or started upon SDT procedure start by the first device 110. In some other example embodiments, the SDT procedure may not succeed due to a configuration failure at the first device 110. Such configuration failure may be initiated at the first device 110 if it receives a configuration from the second device 120 which the first device 110 may not support. In some examples, such configuration failure may be initiated at the first device 110 due to inability to comply with a message or a part of the message received from the second device 120. In some other example embodiments, the SDT procedure may not succeed due to number of SDT attempts by the first device 110 hitting or exceeding a configured threshold. For example, the first device 110 may attempt SDT over RA-SDT or CG-SDT only a limited number of times before it determines SDT failure.

Such failure in succeeding SDT procedure or generally an SDT failure may require first device 110 to initiate a procedure to recover from the failure or restore the connection to second device 120. In some example embodiments, the first device 110 initiates a new SDT procedure to recover from the failure. For example, the first device 110 performs the SDT mode selection again and may initiate the SDT procedure if the first device 110 determines some or all the validity conditions to be fulfilled. Alternatively, in some examples, if the validity conditions are not fulfilled, the first device 110 may start a connection establishment or resume procedure to resume the connection to second device 120 in connected state. In some example embodiments, the first device 110 may enter idle state upon an SDT failure. In some example embodiments, the first device 110 may enter inactive state upon an SDT failure. In some example embodiments, the first device 110 initiates RRC re-establishment procedure to recover from the failure and restore/re-establish connection with the second device 120. For example, the first device 110 may initiate a transmission of *RRCReestablishmentRequest* to re-establish connection with the second device 120. In some example embodiments, the first device 110 initiates RRC connection establishment procedure to recover from the failure and establish connection with the second device 120 again. For example, the first device 110 may initiate a transmission of *RRCSetupRequest* to establish connection with the second device 120 in case the first device 110 enters idle mode upon SDT failure. For example, the first device 110 may initiate a transmission of *RRCResumeRequest* to establish connection with the second device 120 in case the first device 110 enters inactive mode upon SDT failure.

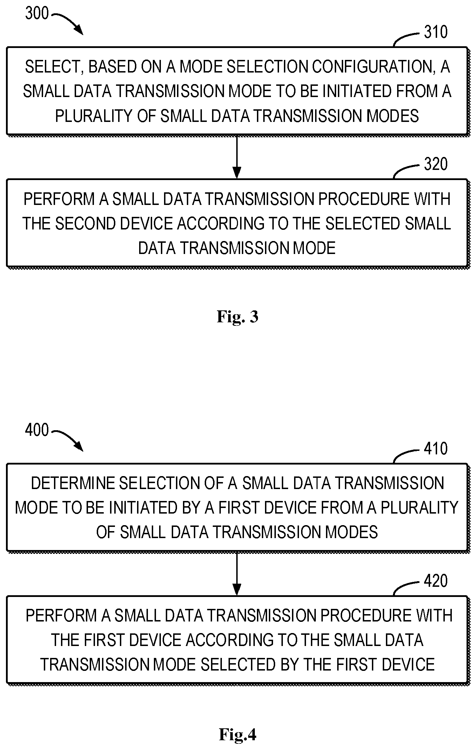

Fig. 3 shows a flowchart of an example method 300 implemented at a first device 110 in accordance with some example embodiments of the present disclosure. For the purpose of discussion, the method 300 will be described from the perspective of the first device 110 with respect to Fig. 1.

At block 310, the first device 110 selects, based on a mode selection configuration, a SDT mode to be initiated from a plurality of SDT modes. At block 320, the first device 110 performs a SDT procedure with the second device 120 according to the selected SDT mode.

In some example embodiments, the first device 110 indicates the selection of the SDT mode to the second device 120.

In some example embodiments, at least two of the plurality of SDT modes define different numbers of data transmissions during a SDT procedure and/or different resource types used in a SDT procedure.

In some example embodiments, the plurality of SDT modes comprises at least one of the following:
a) a SDT mode that allows a single data transmission during a SDT procedure,
b) a SDT mode that allows a plurality of data transmissions during a SDT procedure,
c) a SDT mode that uses a RA resource (or a RA procedure) for a SDT procedure,
d) a SDT mode that uses a CG resource for a SDT procedure,
e) a SDT mode that allows a single data transmission and uses a RA resource (or a RA procedure) for a SDT procedure,
f) a SDT mode that allows a plurality of data transmissions and uses a RA resource (or a RA procedure) for a SDT procedure,
g) a SDT mode that allows a single data transmission and uses a CG resource for a SDT procedure,
h) a SDT mode that allows a plurality of data transmissions and uses a CG resource for a SDT procedure,
i) a SDT mode that allows a single data transmission and uses a two-step RA resource (or a two-step RA procedure) for a SDT procedure,
j) a SDT mode that allows a plurality of data transmissions and uses a two-step RA resource (or a two-step RA procedure) for a SDT procedure,
k) a SDT mode that allows a single data transmission and uses a fourth-step RA resource (or a fourth-step RA procedure) for a SDT procedure, or
l) a SDT mode that allows a plurality of data transmissions and uses a fourth-step RA resource (or a fourth-step RA procedure) for a SDT procedure.

In some example embodiments, the mode selection configuration comprises a first data volume threshold for a first SDT mode of the plurality of SDT modes and a second data volume threshold for a second SDT mode of the plurality of SDT modes, the second data volume threshold being higher than the first data volume threshold. In some example embodiments, the first device 110 selects a SDT mode to be initiated by: comparing a volume of data to be transmitted with the first and the second data volume thresholds; in accordance with a determination that the volume of the data is below the first data volume threshold, determining that the first SDT mode is to be initiated; and in accordance with a determination that the volume of the data exceeds the first data volume threshold and is below the second data volume threshold, determining that the second SDT mode is to be initiated.

In some example embodiments, the mode selection configuration comprises a validity configuration indicating whether the first device 110 is allowed to initiate any of the plurality of SDT modes. In some example embodiments, the first device 110 selects a SDT mode to be initiated by: in accordance with the validity configuration indicating that the first device 110 is allowed to initiate one of the plurality of SDT modes, determining that the SDT mode is to be initiated.

In some example embodiments, the mode selection configuration further comprises a third data volume threshold. In some example embodiments, the first device 110 determines whether the SDT mode is to be initiated by: comparing a volume of data to be transmitted with the third data volume threshold; and in accordance with the validity configuration indicating that the first device 110 is allowed to initiate one of the plurality of SDT modes and in accordance with a determination that the volume of the data is below the third data volume threshold, determine that the SDT mode is to be initiated.

In some example embodiments, the validity configuration comprises a criterion for determining whether the first device 110 is allowed to initiate any of the plurality of SDT modes, the criterion being based on at least one of the following: a comparison of a mobility level of the first device 110 with a mobility threshold, a device type of the first device 110, data availability in at least one radio bearer allowed for a SDT, data availability in at least one radio bearer allowed for one of the plurality of SDT modes, or power saving preference of the first device 110 or of a user of the first device 110.

In some example embodiments, the validity configuration comprises at least one of the following: a first allowance indication that the first device 110 is allowed to initiate a first SDT mode, a second allowance indication that the first device 110 is allowed to initiate a second SDT mode, a third allowance indication that the first device 110 is prevented from initiating the first SDT mode, a fourth allowance indication that the first device 110 is prevented from initiating the second SDT mode, a fifth allowance indication of whether a subsequent uplink or downlink data transmission is allowed during a SDT procedure, or a sixth allowance indication of whether the first device 110 is allowed to initiate a SDT mode using a specific resource type.

In some example embodiments, the mode selection configuration comprises a first channel quality threshold for a first SDT mode of the plurality of SDT modes and a second channel quality threshold for a second SDT mode of the plurality of SDT modes, the second channel quality threshold being higher than the first channel quality threshold. In some example embodiments, the first device 110 selects a SDT mode to be initiated by: compare a quality of a channel between the first device 110 and the second device 120 with the first and the second channel quality thresholds; in accordance with a determination that the quality of the channel exceeds the first channel quality threshold and is below the second channel quality threshold, determining that the first SDT mode is allowed to be selected; and in accordance with a determination that the quality of the channel exceeds the second channel quality threshold, determining that the first SDT mode and the second SDT mode are allowed to be selected.

In some example embodiments, the first device 110 indicates the selection of the SDT mode by: encoding indication information about the selection of the SDT mode into a message to be transmitted to the second device 120; and causing the message encoded with the indication information to be transmitted to the second device 120 during the SDT procedure.

In some example embodiments, the first device 110 indicates the selection of the SDT mode by: transmitting, to the second device 120, a second message for the SDT procedure based on at least one of: one of a plurality of available resources corresponding to the selected SDT mode, one of a plurality of resource types corresponding to the selected SDT mode, or one of a plurality of random access types corresponding to the selected SDT mode.

In some example embodiments, the first device 110 receives the mode selection configuration from the second device 120 or at least another device. In some example embodiments, the first device 110 receives, from the second device 120, broadcast information or dedicated signaling comprising the mode selection configuration.

In some example embodiments, the mode selection configuration is specific to the first device 110 or is specific to a serving area in which the first device 110 is located.

Fig. 4 shows a flowchart of an example method 400 implemented at a second device 120 in accordance with some example embodiments of the present disclosure. For the purpose of discussion, the method 400 will be described from the perspective of the second device 120with respect to Fig. 1.

At block 410, the second device 120 determines selection of a SDT mode to be initiated by a first device 110 from a plurality of SDT modes. At block 420, the second device 120 performs a SDT procedure with the first device 110 according to the SDT mode selected by the first device 110.

In some example embodiments, at least two of the plurality of SDT modes define different numbers of data transmissions during a SDT procedure and/or different resource types used in a SDT procedure.

In some example embodiments, the second device 120 transmits the mode selection configuration to the first device 110. In some example embodiments, the second device 120 transmits, to the first device 110, broadcast information or dedicated signaling comprising the mode selection configuration.

In some example embodiments, the second device 120 determines the selection of the SDT mode by: receiving, from the first device 110, an indication of the selection of the SDT mode.

In some example embodiments, the second device 120 receives the indication of the selection of the SDT mode by: receiving, from the first device 110 and during the SDT procedure, a message encoded with indication information about the selection of the SDT mode; and decoding the indication information from the message.

In some example embodiments, the second device 120 receives the indication of the selection of the SDT mode by: receiving, from the first device 110, a second message for the SDT procedure transmitted via at least one of the following: one of a plurality of available resources corresponding to the selected SDT mode, one of a plurality of resource types corresponding to the selected SDT mode, or one of a plurality of random access types corresponding to the selected SDT mode; and determining that the SDT mode is initiated based on the reception of the message.

In some example embodiments, a first apparatus capable of performing any of the method 300 (for example, the first device 110) may comprise means for performing the respective operations of the method 300. The means may be implemented in any suitable form. For example, the means may be implemented in a circuitry or software module. The first apparatus may be implemented as or included in the first device 110.

In some example embodiments, the first apparatus comprises: means for selecting, based on a mode selection configuration, a small data transmission mode to be initiated from a plurality of small data transmission modes; and means for performing a small data transmission procedure with a second apparatus (e.g., the second device 120) according to the selected small data transmission mode.

In some example embodiments, the firs apparatus further comprises means for indicating the selection of the small data transmission mode to the second apparatus.

In some example embodiments, at least two of the plurality of small data transmission modes define different numbers of data transmissions during a small data transmission procedure and/or different resource types used in a small data transmission procedure.

In some example embodiments, the mode selection configuration comprises a first data volume threshold for a first small data transmission mode of the plurality of small data transmission modes and a second data volume threshold for a second small data transmission mode of the plurality of small data transmission modes, the second data volume threshold being higher than the first data volume threshold. In some example embodiments, the means for selecting a small data transmission mode to be initiated comprises means for comparing a volume of data to be transmitted with the first and the second data volume thresholds; means for in accordance with a determination that the volume of the data is below the first data volume threshold, determining that the first small data transmission mode is to be initiated; and means for in accordance with a determination that the volume of the data exceeds the first data volume threshold and is below the second data volume threshold, determining that the second small data transmission mode is to be initiated.

In some example embodiments, the mode selection configuration comprises a validity configuration indicating whether the first apparatus is allowed to initiate any of the plurality of small data transmission modes. In some example embodiments, the means for selecting a small data transmission mode to be initiated comprises means for, in accordance with the validity configuration indicating that the first apparatus is allowed to initiate one of the plurality of small data transmission modes, determining that the small data transmission mode is to be initiated.

In some example embodiments, the mode selection configuration further comprises a third data volume threshold. In some example embodiments, the means for determining that the small data transmission mode is to be initiated comprises means for comparing a volume of data to be transmitted with the third data volume threshold; and means for, in accordance with the validity configuration indicating that the first apparatus is allowed to initiate one of the plurality of small data transmission modes and in accordance with a determination that the volume of the data is below the third data volume threshold, determine that the small data transmission mode is to be initiated.

In some example embodiments, the validity configuration comprises a criterion for determining whether the first apparatus is allowed to initiate any of the plurality of small data transmission modes, the criterion being based on at least one of the following: a comparison of a mobility level of the first apparatus with a mobility threshold, an apparatus type of the first apparatus, data availability in at least one radio bearer allowed for a small data transmission, data availability in at least one radio bearer allowed for one of the plurality of small data transmission modes, or power saving preference of the first apparatus or of a user of the first apparatus.

In some example embodiments, the validity configuration comprises at least one of the following: a first allowance indication that the first apparatus is allowed to initiate a first small data transmission mode, a second allowance indication that the first apparatus is allowed to initiate a second small data transmission mode, a third allowance indication that the first apparatus is prevented from initiating the first small data transmission mode, a fourth allowance indication that the first apparatus is prevented from initiating the second small data transmission mode, a fifth allowance indication of whether a subsequent uplink or downlink data transmission is allowed during a small data transmission procedure, or a sixth allowance indication of whether the first apparatus is allowed to initiate a small data transmission mode using a specific resource type.

In some example embodiments, the mode selection configuration comprises a first channel quality threshold for a first small data transmission mode of the plurality of small data transmission modes and a second channel quality threshold for a second small data transmission mode of the plurality of small data transmission modes, the second channel quality threshold being higher than the first channel quality threshold. In some example embodiments, the means for selecting a small data transmission mode to be initiated comprises means for compare a quality of a channel between the first apparatus and the second apparatus with the first and the second channel quality thresholds; means for, in accordance with a determination that the quality of the channel exceeds the first channel quality threshold and is below the second channel quality threshold, determining that the first small data transmission mode is allowed to be selected; and means for, in accordance with a determination that the quality of the channel exceeds the second channel quality threshold, determining that the first small data transmission mode and the second small data transmission mode are allowed to be selected.

In some example embodiments, the means for indicating the selection of the small data transmission mode comprises means for encoding indication information about the selection of the small data transmission mode into a message to be transmitted to the second apparatus; and means for causing the message encoded with the indication information to be transmitted to the second apparatus during the small data transmission procedure.

In some example embodiments, the means for indicating the selection of the small data transmission mode comprises means for transmitting, to the second apparatus, a second message for the small data transmission procedure based on at least one of: one of a plurality of available resources corresponding to the selected small data transmission mode, one of a plurality of resource types corresponding to the selected small data transmission mode, or one of a plurality of random access types corresponding to the selected small data transmission mode.

In some example embodiments, the first apparatus further comprises means for receiving the mode selection configuration from the second apparatus or at least another apparatus. In some example embodiment, the means for receiving comprises means for, receiving broadcast information or dedicated signaling comprising the mode selection configuration.

In some example embodiments, the mode selection configuration is specific to the first apparatus or is specific to a serving area in which the first apparatus is located.

In some example embodiments, the first apparatus further comprises means for performing other operations in some example embodiments of the method 300 or the first device 110. In some example embodiments, the means comprises at least one processor; and at least one memory including computer program code, the at least one memory and computer program code configured to, with the at least one processor, cause the performance of the first apparatus.

In some example embodiments, a second apparatus capable of performing any of the method 400 (for example, the second device 120) may comprise means for performing the respective operations of the method 400. The means may be implemented in any suitable form. For example, the means may be implemented in a circuitry or software module. The second apparatus may be implemented as or included in the second device 120.

In some example embodiments, the second apparatus comprises means for determining selection of a small data transmission mode to be initiated by a first apparatus (e.g., the first device 110) from a plurality of small data transmission modes; and means for performing a small data transmission procedure with the first apparatus according to the small data transmission mode selected by the first apparatus.

In some example embodiments, at least two of the plurality of small data transmission modes define different numbers of data transmissions during a small data transmission procedure and/or different resource types used in a small data transmission procedure.

In some example embodiments, the second apparatus further comprises means for transmitting the mode selection configuration to the first apparatus. In some example embodiments, the means for transmitting comprises means for transmitting, to the first apparatus, broadcast information or dedicated signaling comprising the mode selection configuration.

In some example embodiments, the means for determining the selection of the small data transmission mode comprises means for receiving, from the first apparatus, an indication of the selection of the small data transmission mode.

In some example embodiments, the means for receiving the indication of the selection of the small data transmission mode comprises means for receiving, from the first apparatus and during the small data transmission procedure, a message encoded with indication information about the selection of the small data transmission mode; and means for decoding the indication information from the message.

In some example embodiments, the means for receiving the indication of the selection of the small data transmission mode comprises means for receiving, from the first apparatus, a second message for the small data transmission procedure transmitted via at least one of the following: one of a plurality of available resources corresponding to the selected small data transmission mode, one of a plurality of resource types corresponding to the selected small data transmission mode, or one of a plurality of random access types corresponding to the selected small data transmission mode; and means for determining that the small data transmission mode is initiated based on the reception of the message.

In some example embodiments, the second apparatus further comprises means for performing other operations in some example embodiments of the method 400 or the second device 120. In some example embodiments, the means comprises at least one processor; and at least one memory including computer program code, the at least one memory and computer program code configured to, with the at least one processor, cause the performance of the second apparatus.

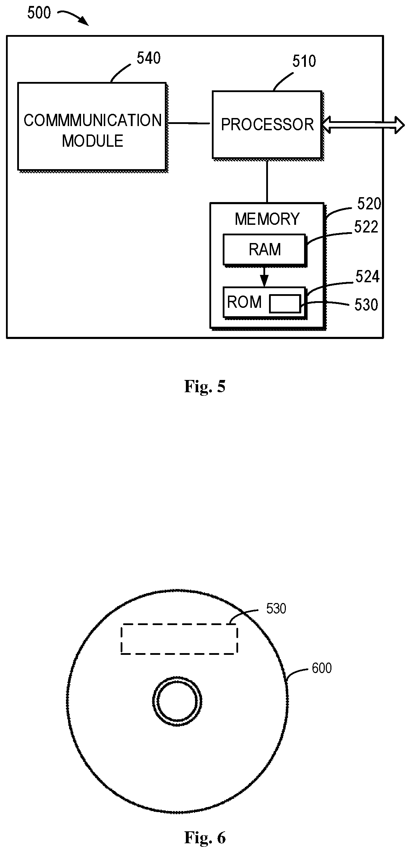

Fig. 5 is a simplified block diagram of a device 500 that is suitable for implementing example embodiments of the present disclosure. The device 500 may be provided to implement a communication device, for example, the first device 110 or the second device 120 as shown in Fig. 1. As shown, the device 500 includes one or more processors 510, one or more memories 520 coupled to the processor 510, and one or more communication modules 540 coupled to the processor 510.

The communication module 540 is for bidirectional communications. The communication module 540 has one or more communication interfaces to facilitate communication with one or more other modules or devices. The communication interfaces may represent any interface that is necessary for communication with other network elements. In some example embodiments, the communication module 540 may include at least one antenna.

The processor 510 may be of any type suitable to the local technical network and may include one or more of the following: general purpose computers, special purpose computers, microprocessors, digital signal processors (DSPs) and processors based on multicore processor architecture, as non-limiting examples. The device 500 may have multiple processors, such as an application specific integrated circuit chip that is slaved in time to a clock which synchronizes the main processor.

The memory 520 may include one or more non-volatile memories and one or more volatile memories. Examples of the non-volatile memories include, but are not limited to, a Read Only Memory (ROM) 524, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 522 and other volatile memories that will not last in the power-down duration.

A computer program 530 includes computer executable instructions that are executed by the associated processor 510. The program 530 may be stored in the memory, e.g., ROM 524. The processor 510 may perform any suitable actions and processing by loading the program 530 into the RAM 522.

The example embodiments of the present disclosure may be implemented by means of the program 530 so that the device 500 may perform any process of the disclosure as discussed with reference to Figs. 2 to 4. The example embodiments of the present disclosure may also be implemented by hardware or by a combination of software and hardware.

In some example embodiments, the program 530 may be tangibly contained in a computer readable medium which may be included in the device 500 (such as in the memory 520) or other storage devices that are accessible by the device 500. The device 500 may load the program 530 from the computer readable medium to the RAM 522 for execution. The computer readable medium may include any types of tangible non-volatile storage, such as ROM, EPROM, a flash memory, a hard disk, CD, DVD, and the like. Fig. 6 shows an example of the computer readable medium 600 which may be in form of CD, DVD or other optical storage disk. The computer readable medium has the program 530 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target physical or virtual processor, to carry out any of the methods as described above with reference to Fig. 2, Fig. 4, and Figs. 5 to 6. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first device (110) comprising:
at least one processor (510); and
at least one memory (520) including computer program code;
wherein the at least one memory and the computer program code are configured to, with the at least one processor, cause the first device to:
select (310), based on a mode selection configuration, a small data transmission mode to be initiated from a plurality of small data transmission modes, wherein the mode selection configuration comprises a validity configuration indicating whether the first device is allowed to initiate any of the plurality of small data transmission modes and wherein the validity configuration comprises a criterion for determining whether the first device is allowed to initiate any of the plurality of small data transmission modes, the criterion being based on at least one of a comparison of a mobility level of the first device with a mobility threshold, a device type of the first device and a device capability; and
perform (320) a small data transmission procedure with a second device (120) according to the selected small data transmission mode.

2. The first device of claim 1, wherein the at least one memory and the computer program code are configured to, with the at least one processor, further cause the first device to:
indicate the selection of the small data transmission mode to the second device.

3. The first device of claim 1, wherein at least two of the plurality of small data transmission modes define different numbers of data transmissions during a small data transmission procedure and/or different resource types used in a small data transmission procedure.

4. The first device of claim 1, wherein the mode selection configuration comprises a first data volume threshold for a first small data transmission mode of the plurality of small data transmission modes and a second data volume threshold for a second small data transmission mode of the plurality of small data transmission modes, the second data volume threshold being higher than the first data volume threshold; and
wherein the at least one memory and the computer program code are configured to, with the at least one processor, cause the first device to select a small data transmission mode to be initiated by:
comparing a volume of data to be transmitted with the first and the second data volume thresholds;
in accordance with a determination that the volume of the data is below the first data volume threshold, determining that the first small data transmission mode is to be initiated; and
in accordance with a determination that the volume of the data exceeds the first data volume threshold and is below the second data volume threshold, determining that the second small data transmission mode is to be initiated.

5. The first device of claim 1, wherein the at least one memory and the computer program code are configured to, with the at least one processor, cause the first device to select a small data transmission mode to be initiated by:
in accordance with the validity configuration indicating that the first device is allowed to initiate one of the plurality of small data transmission modes, determining that the small data transmission mode is to be initiated.

6. The first device of claim 5, wherein the mode selection configuration further comprises a third data volume threshold, and wherein the at least one memory and the computer program code are configured to, with the at least one processor, cause the first device to determine that the small data transmission mode is to be initiated by:
comparing a volume of data to be transmitted with the third data volume threshold; and
in accordance with the validity configuration indicating that the first device is allowed to initiate one of the plurality of small data transmission modes and in accordance with a determination that the volume of the data is below the third data volume threshold, determine that the small data transmission mode is to be initiated.

7. The first device of claim 5, wherein the validity configuration comprises a criterion for determining whether the first device is allowed to initiate any of the plurality of small data transmission modes, the criterion being based on at least one of the following:
data availability in at least one radio bearer allowed for a small data transmission,
data availability in at least one radio bearer allowed for one of the plurality of small data transmission modes, or
power saving preference of the first device or of a user of the first device.

8. The first device of claim 5, wherein the validity configuration comprises at least one of the following:
a first allowance indication that the first device is allowed to initiate a first small data transmission mode,
a second allowance indication that the first device is allowed to initiate a second small data transmission mode,
a third allowance indication that the first device is prevented from initiating the first small data transmission mode,
a fourth allowance indication that the first device is prevented from initiating the second small data transmission mode,
a fifth allowance indication of whether a subsequent uplink or downlink data transmission is allowed during a small data transmission procedure, or
a sixth allowance indication of whether the first device is allowed to initiate a small data transmission mode using a specific resource type.

9. The first device of claim 1, wherein the mode selection configuration comprises a first channel quality threshold for a first small data transmission mode of the plurality of small data transmission modes and a second channel quality threshold for a second small data transmission mode of the plurality of small data transmission modes, the second channel quality threshold being higher than the first channel quality threshold, and
wherein the at least one memory and the computer program code are configured to, with the at least one processor, cause the first device to select a small data transmission mode to be initiated by:
compare a quality of a channel between the first device and the second device with the first and the second channel quality thresholds;
in accordance with a determination that the quality of the channel exceeds the first channel quality threshold and is below the second channel quality threshold, determining that the first small data transmission mode is allowed to be selected; and
in accordance with a determination that the quality of the channel exceeds the second channel quality threshold, determining that the first small data transmission mode and the second small data transmission mode are allowed to be selected.

10. The first device of claim 2, wherein the at least one memory and the computer program code are configured to, with the at least one processor, cause the first device to indicate the selection of the small data transmission mode by:
encoding indication information about the selection of the small data transmission mode into a message to be transmitted to the second device; and
causing the message encoded with the indication information to be transmitted to the second device during the small data transmission procedure.

11. The first device of claim 2, wherein the at least one memory and the computer program code are configured to, with the at least one processor, cause the first device to indicate the selection of the small data transmission mode by:
transmitting, to the second device, a message for the small data transmission procedure based on at least one of:
one of a plurality of available resources corresponding to the selected small data transmission mode,
one of a plurality of resource types corresponding to the selected small data transmission mode, or
one of a plurality of random access types corresponding to the selected small data transmission mode.

12. A method (300) comprising:
Selecting (310), at a first device (110) and based on a mode selection configuration, a small data transmission mode to be initiated from a plurality of small data transmission modes, wherein the mode selection configuration comprises a validity configuration indicating whether the first device is allowed to initiate any of the plurality of small data transmission modes and wherein the validity configuration comprises a criterion for determining whether the first device is allowed to initiate any of the plurality of small data transmission modes, the criterion being based on at least one of a comparison of a mobility level of the first device with a mobility threshold, a device type of the first device and a device capability; and
performing (320) a small data transmission procedure with the second device (120) according to the selected small data transmission mode.

13. A computer readable medium comprising program instructions for causing an apparatus to perform at least the method of claim 12.

## Patentansprüche

1. Erste Vorrichtung (110), die Folgendes umfasst:
mindestens einen Prozessor (510); und
mindestens einen Speicher (520), der einen Computerprogrammcode beinhaltet;
wobei der mindestens eine Speicher und der Computerprogrammcode dazu ausgelegt sind, die erste Vorrichtung mit dem mindestens einen Prozessor zu Folgendem zu veranlassen:
Auswählen (310) eines Kleindatenübertragungsmodus, der aus einer Vielzahl von Kleindatenübertragungsmodi zu initiieren ist, auf Basis einer Modusauswahlauslegung, wobei die Modusauswahlauslegung eine Validitätsauslegung umfasst, die anzeigt, ob es der ersten Vorrichtung erlaubt ist, eine der Vielzahl von Kleindatenübertragungsmodi zu initiieren, und wobei die Validitätsauslegung ein Kriterium zum Bestimmen, ob es der ersten Vorrichtung erlaubt ist, einen der Vielzahl von Kleindatenübertragungsmodi zu initiieren, umfasst, wobei das Kriterium auf mindestens einem von einem Vergleich von einem Mobilitätsniveau der ersten Vorrichtung mit einem Mobilitätsschwellwert, einer Vorrichtungsart der ersten Vorrichtung und einer Vorrichtungsfähigkeit basiert; und
Durchführen (320) einer Kleindatenübertragungsprozedur mit einer zweiten Vorrichtung (120) gemäß dem ausgewählten Kleindatenübertragungsmodus.

2. Erste Vorrichtung nach Anspruch 1, wobei der mindestens eine Speicher und der Computerprogrammcode dazu ausgelegt sind, die erste Vorrichtung mit dem mindestens einen Prozessor ferner zu Folgendem zu veranlassen:
Anzeigen der Auswahl des Kleindatenübertragungsmodus für die zweite Vorrichtung.

3. Erste Vorrichtung nach Anspruch 1, wobei mindestens zwei der Vielzahl von Kleindatenübertragungsmodi verschiedene Anzahlen von Datenübertragungen während einer Kleindatenübertragungsprozedur und/oder verschiedene Ressourcenarten, die bei einer Kleindatenübertragungsprozedur verwendet werden, definieren.

4. Erste Vorrichtung nach Anspruch 1, wobei die Modusauswahlauslegung einen ersten Datenvolumenschwellwert für einen ersten Kleindatenübertragungsmodus der Vielzahl von Kleindatenübertragungsmodi und einen zweiten Datenvolumenschwellwert für einen zweiten Kleindatenübertragungsmodus der Vielzahl von Kleindatenübertragungsmodi umfasst, wobei der zweite Datenvolumenschwellwert höher ist als der erste Datenvolumenschwellwert; und
wobei der mindestens eine Speicher und der Computerprogrammcode dazu ausgelegt sind, die erste Vorrichtung mit dem mindestens einen Prozessor durch Folgendes zu veranlassen, einen Kleindatenübertragungsmodus auszuwählen:
Vergleichen eines zu übertragenden Datenvolumens mit dem ersten und dem zweiten Datenvolumenschwellwert;
gemäß einer Bestimmung, dass das Datenvolumen unter dem ersten Datenvolumenschwellwert liegt, Bestimmen, dass der erste Kleindatenübertragungsmodus zu initiieren ist; und
gemäß einer Bestimmung, dass das Datenvolumen den ersten Datenvolumenschwellwert überschreitet und unter dem zweiten Datenvolumenschwellwert liegt, Bestimmen, dass der zweite Kleindatenübertragungsmodus zu initiieren ist.

5. Erste Vorrichtung nach Anspruch 1, wobei der mindestens eine Speicher und der Computerprogrammcode dazu ausgelegt sind, die erste Vorrichtung mit dem mindestens einen Prozessor durch Folgendes zu veranlassen, einen Kleindatenübertragungsmodus auszuwählen:
gemäß dem, dass die Validitätsauslegung anzeigt, dass es der ersten Vorrichtung erlaubt ist, einen der Vielzahl von Kleindatenübertragungsmodi zu initiieren, Bestimmen, dass der Kleindatenübertragungsmodus zu initiieren ist.

6. Erste Vorrichtung nach Anspruch 5, wobei die Modusauswahlauslegung ferner einen dritten Datenvolumenschwellwert umfasst, und wobei der mindestens eine Speicher und der Computerprogrammcode dazu ausgelegt sind, die erste Vorrichtung mit dem mindestens einen Prozessor zu veranlassen zu bestimmen, dass der Kleindatenübertragungsmodus durch Folgendes zu initiieren ist:
Vergleichen eines zu übertragenden Datenvolumens mit dem dritten Datenvolumenschwellwert; und
gemäß dem, dass die Validitätsauslegung anzeigt, dass es der ersten Vorrichtung erlaubt ist, einen der Vielzahl von Kleindatenübertragungsmodi zu initiieren, und gemäß einer Bestimmung, dass das Datenvolumen unter dem dritten Datenvolumenschwellwert liegt, Bestimmen, dass der Kleindatenübertragungsmodus zu initiieren ist.

7. Erste Vorrichtung nach Anspruch 5, wobei die Validitätsauslegung ein Kriterium zum Bestimmen umfasst, ob es der ersten Vorrichtung erlaubt ist, einen der Vielzahl von Kleindatenübertragungsmodi zu initiieren, wobei das Kriterium auf mindestens einem von Folgendem basiert:
Datenverfügbarkeit in mindestens einem Funkträger, der für eine Kleindatenübertragung zugelassen ist,
Datenverfügbarkeit in mindestens einem Funkträger, der für einen der Vielzahl von Kleindatenübertragungsmodi zugelassen ist, oder
Energieeinsparungspräferenz der ersten Vorrichtung oder eines Benutzers der ersten Vorrichtung.

8. Erste Vorrichtung nach Anspruch 5, wobei die Validitätsauslegung mindestens eines von Folgendem umfasst:
einer ersten Erlaubnisanzeige, dass es der ersten Vorrichtung erlaubt ist, einen ersten Kleindatenübertragungsmodus zu initiieren,
einer zweiten Erlaubnisanzeige, dass es der ersten Vorrichtung erlaubt ist, einen zweiten Kleindatenübertragungsmodus zu initiieren,
einer dritten Erlaubnisanzeige, dass es verhindert wird, dass die erste Vorrichtung den ersten Kleindatenübertragungsmodus initiiert,
einer vierten Erlaubnisanzeige, dass es verhindert wird, dass die erste Vorrichtung den zweiten Kleindatenübertragungsmodus initiiert,
einer fünften Erlaubnisanzeige dazu, ob eine nachfolgende Uplink- oder Downlinkdatenübertragung während einer Kleindatenübertragungsprozedur erlaubt ist, oder
einer sechsten Erlaubnisanzeige dazu, ob es der ersten Vorrichtung erlaubt ist, einen Kleindatenübertragungsmodus unter Verwendung einer spezifischen Ressourcenart zu initiieren.

9. Erste Vorrichtung nach Anspruch 1, wobei die Modusauswahlauslegung einen ersten Kanalqualitätsschwellwert für einen ersten Kleindatenübertragungsmodus der Vielzahl von Kleindatenübertragungsmodi und einen zweiten Kanalqualitätsschwellwert für einen zweiten Kleindatenübertragungsmodus der Vielzahl von Kleindatenübertragungsmodi umfasst, wobei der zweite Kanalqualitätsschwellwert höher ist als der erste Kanalqualitätsschwellwert, und
wobei der mindestens eine Speicher und der Computerprogrammcode dazu ausgelegt sind, die erste Vorrichtung mit dem mindestens einen Prozessor durch Folgendes zu veranlassen, einen Kleindatenübertragungsmodus auszuwählen:
Vergleichen einer Qualität eines Kanals zwischen der ersten Vorrichtung und der zweiten Vorrichtung mit dem ersten und dem zweiten Kanalqualitätsschwellwert;
gemäß einer Bestimmung, dass die Qualität des Kanals den ersten Kanalqualitätsschwellwert überschreitet und unter dem zweiten Kanalqualitätsschwellwert liegt, Bestimmen, dass es erlaubt ist, den ersten Kleindatenübertragungsmodus auszuwählen; und
gemäß einer Bestimmung, dass die Qualität des Kanals den zweiten Kanalqualitätsschwellwert überschreitet, Bestimmen, dass es erlaubt ist, den ersten Kleindatenübertragungsmodus und den zweiten Kleindatenübertragungsmodus auszuwählen.

10. Erste Vorrichtung nach Anspruch 2, wobei der mindestens eine Speicher und der Computerprogrammcode dazu ausgelegt sind, die erste Vorrichtung mit dem mindestens einen Prozessor durch Folgendes zu veranlassen, die Auswahl des Kleindatenübertragungsmodus anzuzeigen:
Codieren von Anzeigeinformationen über die Auswahl des Kleindatenübertragungsmodus zu einer Nachricht, die zur zweiten Vorrichtung zu übertragen ist; und
Veranlassen, dass die Nachricht, die mit den Anzeigeinformationen codiert ist, während der Kleindatenübertragungsprozedur zur zweiten Vorrichtung übertragen wird.

11. Erste Vorrichtung nach Anspruch 2, wobei der mindestens eine Speicher und der Computerprogrammcode dazu ausgelegt sind, die erste Vorrichtung mit dem mindestens einen Prozessor durch Folgendes zu veranlassen, die Auswahl des Kleindatenübertragungsmodus anzuzeigen:
Übertragen einer Nachricht für die Kleindatenübertragungsprozedur zur zweiten Vorrichtung mindestens auf Basis von Folgendem:
einer von einer Vielzahl von verfügbaren Ressourcen, die dem ausgewählten Kleindatenübertragungsmodus entspricht,
einer von einer Vielzahl von Ressourcenarten, die dem ausgewählten Kleindatenübertragungsmodus entspricht, oder
einer von einer Vielzahl von Direktzugriffsarten, die dem ausgewählten Kleindatenübertragungsmodus entspricht.

12. Verfahren (300), das Folgendes umfasst:
Auswählen (310) eines Kleindatenübertragungsmodus, der aus einer Vielzahl von Kleindatenübertragungsmodi zu initiieren ist, an einer ersten Vorrichtung (110) auf Basis einer Modusauswahlauslegung, wobei die Modusauswahlauslegung eine Validitätsauslegung umfasst, die anzeigt, ob es der ersten Vorrichtung erlaubt ist, eine der Vielzahl von Kleindatenübertragungsmodi zu initiieren, und wobei die Validitätsauslegung ein Kriterium zum Bestimmen, ob es der ersten Vorrichtung erlaubt ist, einen der Vielzahl von Kleindatenübertragungsmodi zu initiieren, umfasst, wobei das Kriterium auf mindestens einem von einem Vergleich von einem Mobilitätsniveau der ersten Vorrichtung mit einem Mobilitätsschwellwert, einer Vorrichtungsart der ersten Vorrichtung und einer Vorrichtungsfähigkeit basiert; und
Durchführen (320) einer Kleindatenübertragungsprozedur mit der zweiten Vorrichtung (120) gemäß dem ausgewählten Kleindatenübertragungsmodus.

13. Computerlesbares Medium, das Programmanweisungen zum Veranlassen einer Vorrichtung, mindestens das Verfahren nach Anspruch 12 durchzuführen, umfasst.

## Revendications

1. Premier dispositif (110) comprenant :
au moins un processeur (510) ; et
au moins une mémoire (520) comportant un code de programme informatique ;
dans lequel l'au moins une mémoire et le code de programme informatique sont configurés pour, avec l'au moins un processeur, amener le premier dispositif à :
sélectionner (310), sur la base d'une configuration de sélection de mode, un mode de transmission de petites données devant être initié parmi une pluralité de modes de transmission de petites données, dans lequel la configuration de sélection de mode comprend une configuration de validité indiquant si le premier dispositif est autorisé à initier l'un quelconque de la pluralité de modes de transmission de petites données, et dans lequel la configuration de validité comprend un critère pour déterminer si le premier dispositif est autorisé à initier l'un quelconque de la pluralité de modes de transmission de petites données, le critère étant basé sur au moins un parmi une comparaison d'un niveau de mobilité du premier dispositif avec un seuil de mobilité, un type de dispositif du premier dispositif et une capacité de dispositif ; et
effectuer (320) une procédure de transmission de petites données avec un deuxième dispositif (120) selon le mode de transmission de petites données sélectionné.

2. Premier dispositif selon la revendication 1, dans lequel l'au moins une mémoire et le code de programme informatique sont configurés pour, avec l'au moins un processeur, amener en outre le premier dispositif à :
indiquer la sélection du mode de transmission de petites données au deuxième dispositif.

3. Premier dispositif selon la revendication 1, dans lequel au moins deux de la pluralité de modes de transmission de petites données définissent différents nombres de transmissions de données pendant une procédure de transmission de petites données et/ou différents types de ressources utilisés dans une procédure de transmission de petites données.

4. Premier dispositif selon la revendication 1, dans lequel la configuration de sélection de mode comprend un premier seuil de volume de données pour un premier mode de transmission de petites données de la pluralité de modes de transmission de petites données et un deuxième seuil de volume de données pour un deuxième mode de transmission de petites données de la pluralité de modes de transmission de petites données, le deuxième seuil de volume de données étant supérieur au premier seuil de volume de données ; et
dans lequel l'au moins une mémoire et le code de programme informatique sont configurés pour, avec l'au moins un processeur, amener le premier dispositif à sélectionner un mode de transmission de petites données devant être initié :
en comparant un volume de données à transmettre avec les premier et deuxième seuils de volume de données ;
lorsqu'il est déterminé que le volume des données est inférieur au premier seuil de volume de données, en déterminant que le premier mode de transmission de petites données doit être initié ; et
lorsqu'il est déterminé que le volume des données dépasse le premier seuil de volume de données et qu'il est inférieur au deuxième seuil de volume de données, en déterminant que le deuxième mode de transmission de petites données doit être initié.

5. Premier dispositif selon la revendication 1, dans lequel l'au moins une mémoire et le code de programme informatique sont configurés pour, avec l'au moins un processeur, amener le premier dispositif à sélectionner un mode de transmission de petites données devant être initié :
lorsque la configuration de validité indique que le premier dispositif est autorisé à initier l'un de la pluralité de modes de transmission de petites données, en déterminant que le mode de transmission de petites données doit être initié.

6. Premier dispositif selon la revendication 5, dans lequel la configuration de sélection de mode comprend en outre un troisième seuil de volume de données, et dans lequel l'au moins une mémoire et le code de programme informatique sont configurés pour, avec l'au moins un processeur, amener le premier dispositif à déterminer que le mode de transmission de petites données doit être initié :
en comparant un volume de données à transmettre avec le troisième seuil de volume de données ; et
lorsque la configuration de validité indique que le premier dispositif est autorisé à initier l'un de la pluralité de modes de transmission de petites données et lorsqu'il est déterminé que le volume des données est inférieur au troisième seuil de volume de données, en déterminant que le mode de transmission de petites données doit être initié.

7. Premier dispositif selon la revendication 5, dans lequel la configuration de validité comprend un critère pour déterminer si le premier dispositif est autorisé à initier l'un quelconque de la pluralité de modes de transmission de petites données, le critère étant basé sur au moins un des éléments suivants :
la disponibilité des données dans au moins un support radio autorisé pour une transmission de petites données,
la disponibilité des données dans au moins un support radio autorisé pour l'un de la pluralité de modes de transmission de petites données, ou
une préférence d'économie d'énergie du premier dispositif ou d'un utilisateur du premier dispositif.

8. Premier dispositif selon la revendication 5, dans lequel la configuration de validité comprend au moins l'un des éléments suivants :
une première indication d'autorisation selon laquelle le premier dispositif est autorisé à initier un premier mode de transmission de petites données,
une deuxième indication d'autorisation selon laquelle le premier dispositif est autorisé à initier un deuxième mode de transmission de petites données,
une troisième indication d'autorisation selon laquelle le premier dispositif n'est pas autorisé à initier le premier mode de transmission de petites données,
une quatrième indication d'autorisation selon laquelle le premier dispositif n'est pas autorisé à initier le deuxième mode de transmission de petites données,
une cinquième indication d'autorisation précisant si une transmission de données de liaison montante ou de liaison descendante ultérieure est autorisée pendant une procédure de transmission de petites données, ou
une sixième indication d'autorisation précisant si le premier dispositif est autorisé à initier un mode de transmission de petites données en utilisant un type de ressource spécifique.

9. Premier dispositif selon la revendication 1, dans lequel la configuration de sélection de mode comprend un premier seuil de qualité de canal pour un premier mode de transmission de petites données de la pluralité de modes de transmission de petites données et un deuxième seuil de qualité de canal pour un deuxième mode de transmission de petites données de la pluralité de modes de transmission de petites données, le deuxième seuil de qualité de canal étant supérieur au premier seuil de qualité de canal, et
dans lequel l'au moins une mémoire et le code de programme informatique sont configurés pour, avec l'au moins un processeur, amener le premier dispositif à sélectionner un mode de transmission de petites données devant être initié :
en comparant une qualité d'un canal entre le premier dispositif et le deuxième dispositif avec les premier et deuxième seuils de qualité de canal ;
lorsqu'il est déterminé que la qualité du canal dépasse le premier seuil de qualité de canal et qu'elle est inférieure au deuxième seuil de qualité de canal, en déterminant que la sélection du premier mode de transmission de petites données est autorisée ; et
lorsqu'il est déterminé que la qualité du canal dépasse le deuxième seuil de qualité de canal, en déterminant que la sélection du premier mode de transmission de petites données et du deuxième mode de transmission de petites données est autorisée.

10. Premier dispositif selon la revendication 2, dans lequel l'au moins une mémoire et le code de programme informatique sont configurés pour, avec l'au moins un processeur, amener le premier dispositif à indiquer la sélection du mode de transmission de petites données :
en codant des informations d'indication concernant la sélection du mode de transmission de petites données dans un message à transmettre au deuxième dispositif ; et
en provoquant la transmission du message codé avec les informations d'indication au deuxième dispositif pendant la procédure de transmission de petites données.

11. Premier dispositif selon la revendication 2, dans lequel l'au moins une mémoire et le code de programme informatique sont configurés pour, avec l'au moins un processeur, amener le premier dispositif à indiquer la sélection du mode de transmission de petites données :
en transmettant au deuxième dispositif un message pour la procédure de transmission de petites données sur la base d'au moins un des éléments suivants :
l'une d'une pluralité de ressources disponibles correspondant au mode de transmission de petites données sélectionné,
l'un d'une pluralité de types de ressources correspondant au mode de transmission de petites données sélectionné, ou
l'un d'une pluralité de types d'accès aléatoire correspondant au mode de transmission de petites données sélectionné.

12. Procédé (300) comprenant les étapes suivantes :
sélectionner (310), sur un premier dispositif (110) et sur la base d'une configuration de sélection de mode, un mode de transmission de petites données devant être initié parmi une pluralité de modes de transmission de petites données, dans lequel la configuration de sélection de mode comprend une configuration de validité indiquant si le premier dispositif est autorisé à initier l'un quelconque de la pluralité de modes de transmission de petites données, et dans lequel la configuration de validité comprend un critère pour déterminer si le premier dispositif est autorisé à initier l'un quelconque de la pluralité de modes de transmission de petites données, le critère étant basé sur au moins un parmi une comparaison d'un niveau de mobilité du premier dispositif avec un seuil de mobilité, un type de dispositif du premier dispositif et une capacité de dispositif ; et
effectuer (320) une procédure de transmission de petites données avec le deuxième dispositif (120) selon le mode de transmission de petites données sélectionné.

13. Support lisible par ordinateur comprenant des instructions de programme pour amener un appareil à effectuer au moins le procédé selon la revendication 12.
